# EUROPEAN PATENT SPECIFICATION

(11) **EP 0 581 783 B1**
(45) Date of publication and mention of the grant of the patent: **14.02.1996**
(21) Application number: 92906856.7
(22) Date of filing: 23.03.1992
(51) Int. Cl.: D06P 5/00, G02C 7/04, D06P 3/58, D06P 3/34, D06P 1/28, D06P 1/90

(54) **METHOD OF TINTING HYDROGEL SOFT CONTACT LENS**
Färbeverfahren für weiche Hydrogelkontaktlinsen
PROCEDE DE TEINTURE POUR LENTILLES DE CONTACT SOUPLES A BASE D'HYDROGEL

(30) Priority: 22.03.1991 GB 9106166
(43) Date of publication of application: 09.02.1994
(73) Proprietor: MJS SCIENTIFIC LIMITED, Portchester, Hampshire PO16 9RD (GB)
(72) Inventor: Matharu, Tejprakash Singh, Wallington, Surrey SM6 9LG (GB)
(74) Representative: Jackson, Peter Arthur
(86) International application number: GB9200532
(87) International publication number: WO9216684

(56) References cited:
- EP-A- 0 262 270
- EP-A- 0 309 154
- WO-A-85/04679
- GB-A- 2 202 540
- US-A- 4 719 657
- WORLD PATENTS INDEX LATEST Derwent Publications Ltd., London, GB; AN 91-175228
- PATENT ABSTRACTS OF JAPAN 30 October 1982
- WORLD PATENTS INDEX LATEST Derwent Publications Ltd., London, GB; AN 89-259972
- WORLD PATENTS INDEX LATEST Derwent Publications Ltd., London, GB; AN 88-356151

## Description

This invention relates to formation of colour tint patterns on hydrogel objects such as ophthalmic soft contact lenses for use for cosmetic or prosthetic purposes. It is well known that for many purposes it is desirable to tint portions of a contact lens. This may be in the iris area only and may be in addition to making parts of the lens opaque. In order to make the tinting look more natural it is preferable to make this in an iris pattern rather than a solid area of colour. Various methods described below have been used for tinting selected areas only.

A dye material is formed in a required pattern on a pad or stamp which is pressed into contact with the desired area of the lens. Such a process using a vat dye is described, for example, in US-A-4719657 and EP-A-0177606 which also discloses silk screening. However, it is difficult to print a water-swollen hydrogel resin using an ordinary pad or stamp since the dye used is repelled by surface water and consequently spreads over the surface of the hydrogel resin. It is therefore known to mix the dye with a viscosity enhancing agent or binder to form a paste to prevent it spreading. However, this leaves a paste residue deposit on the imprinted area of the contact lens and this involves a secondary process to attempt to remove the residue paste deposit and leave only the colour. This is not only time consuming but usually leaves the surface of the lens containing surface irregularities and in a poor condition.

It has been proposed for example in EP-A-0177606 and GB-A-2202540, which also discloses screen printing using a vat dye, to use a screen stencilled with the required pattern but again the dye has been formed into a paste and applied to the screen with a doctor blade and the lens has been mounted on a curved support. This again leaves the viscosity enhancing agent or binder on the lens which requires subsequent removal and good contact between the screen and lens is not assured.

In another known method, a dry lens is mounted on a curved support and a chemically polymerised dye paste is forced in a pattern of dots through a screen with the resulting pattern on the lens activated by ultraviolet light.

EP-A-0262270 teaches supporting a lens on a curved mandrel in a tube with curved solid masking portions to block off the inner and outer areas of the lens. An aqueous vat dye solution is then flowed through the tube to contact the iris portion only. However, this produces a solid colour in the iris portion which looks unnatural in use.

Other methods of dying soft contact lenses using a vat dye and screen are shown in EP-A-0309154, JP-A-63-264719, and JP-A-1-188824. Silk screen printing on a soft contact lens is also shown in JP-A-57-120912.

In general, it has previously been thought impossible to use a predominantly aqueous solution of a vat dye (without a viscosity enhancing agent to turn it into a paste) and to get a high definition iris pattern on the iris area of a lens because of the problem of sideways spreading of the dye across the surface of the lens. This is particularly the case with a low water content lens.

According to a first aspect of the present invention there is provided a method of forming a non-solid coloured pattern on a hydrogel substrate, in which the hydrogel material is adhered in a flat disposition by surface tension onto a tensioned flat screen having a stencil pattern formed therein, and a predominantly aqueous solution of a dye in liquid form , without a viscosity enhancing agent, is applied gently to the other side of the screen so that it is absorbed into the hydrogel material only in the non-solid pattern corresponding to the stencilled area and then developed to form a coloured deposit therein.

According to a second aspect of the present invention there is provided a method of tinting the iris area of a hydrogel soft contact lens which comprises exposing the area to be tinted to a vat dye in a predominantly aqueous, liquid, solution without a viscosity enhancing agent by a masking technique so that the dye is absorbed only into the unmasked areas of the lens and then developing the dye, wherein the mask is a flat screen material formed with an unmasked stencil portion in a non-solid pattern in the iris area of the lens, and during tinting the normally curved lens is adhered to the first side of the screen by surface tension in a flat disposition, and the dye solution is applied in drops to the other side of the screen, such that the dye is absorbed in a non-solid pattern into the iris area of the lens.

Preferably, the pattern includes a series of substantially radially extending solid lines or areas.

I have found that despite the fact that the screen must be flat and slightly tensioned to keep it flat and the lens is normally curved, the adhesion between the lens and screen is sufficiently good to prevent spreading of the dye across the surface of the lens so that the dye migrates into the lens and forms a tinted deposit therein after development. The tension should be 5-16, preferably about 6, newtons per cm.

The process is preferably all carried out at ambient temperature.

The dye should preferably be applied within five minutes and more preferably within two minutes of the attachment of the lens to the screen to avoid problems which might be caused by shrinkage of the lens as it dries. The dye solution should preferably be added dropwise and gently to ensure that the lens is not dislodged from the screen.

The invention is particularly applicable to low water content lens (38 to 50% water content for instance material type homopolymer of hydroxyethylmethacrylate composition lightly cross linked) on which it is more difficult to apply other techniques. With such low water content lenses it will normally be necessary to add a swelling agent (of known form) to the dye solution.

With low water content lenses it may be necessary to wet the surface before application by hand to the masking screen and then wait for up to two minutes for this water to be absorbed.

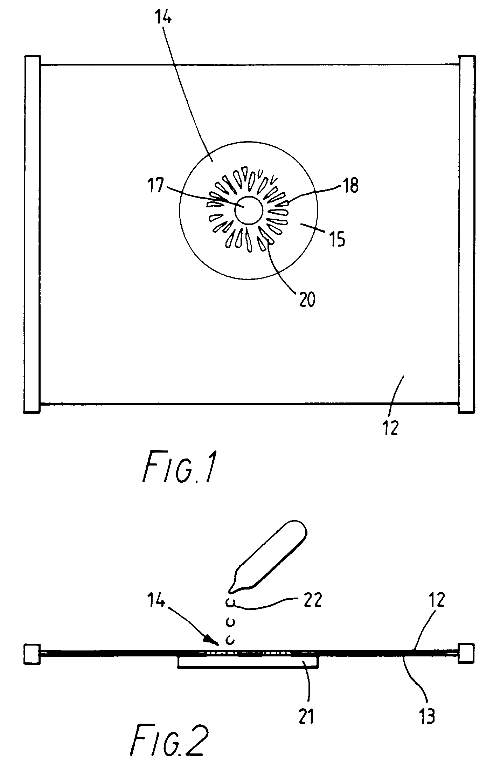

Embodiments and examples of the invention will now be described, by way of example only, with reference to the accompanying diagramatic sketches, of which
Figure 1 shows a masking screen, and
Figure 2 shows diagramatically a section through the screen being used for tinting a lens.

A screen 12 preferably of a monofilament polyester fabric material has at least one side coated with a coating 13 which increases the surface tension between a hydrogel soft contact lens and the screen. This coating is preferably a Fotecoat (Registered Trade Mark) diazo sensitised solvent resistant emulsion (emulsion with a very high edge resolution and edge definition) as available from many coated screen manufacturers eg.Coated Screens Limited. The screen is formed with a plurality of stencil/mask areas 14, only one of which is shown, of a size corresponding to a contact lens when flattened. The outer portion 15 of each area 14, corresponding to the scleral area of the lens, is preferably completely masked and so is the inner area 17 corresponding to the pupillary area of the lens. The annulus 18, corresponding to the iris area is formed with a pattern which resembles the pattern of the natural iris of an eye and preferably has radially outwardly extending lines solid lines or elongate areas 20.

In use a normally curved hydrogel soft contact lens 21 or other hydrogel substrate having a water content preferably in the range 38 to 50% water, is placed on a finger and positioned against the coated underside of the screen 12. The lens is pressed on to the slightly tensioned screen until it is completely flat and in good contact with the screen surface and centred on the centre of the area 14. If necessary the surface of the lens can be first coated with water to make it easier to position. A predominately aqueous solution of dye 22 in liquid form is then applied drop wise to the top surface of the screen so that it passes through the unmasked stencil pattern areas in the iris portion, contacts the lens and penetrates into the lens. After about 2 to 5 minutes the excess dye is removed by absorbent material and the lens gently removed from the mask. The lens is finally preconditioned in developer solution of known form e.g. an oxidizing solution such as a solution of hydrogen peroxide or sulphuric acid/sodium nitrite mix. This causes the vat dye to oxidise and exhibit an insoluble colourant matter in the iris imprint image on the lens. The lens is subsequently preconditioned in distilled or de-ionised water to remove excess developing solution. The result is a lens with a distinct well defined iris pattern image tint with clear pupillary and peripheral areas.

The method is applicable to any of Filcon groups 1 to 5 lenses, but is particularly applicable to Filcon groups 1a, 1b, 2a and 2b lenses.

Suitable dye types for use with the invention are:
The solublised leuco sulphate Esters of
Dibzomodibenzo (b,def) chrysene 7, 14 - dione 16, 23 -Dihydroalinaphitto (2,3-a: 2',3'-1') naphth (2'3'.-6,7) ido indolo (2,3-c) carbazole - 5, 10, 15, 27, 22, 24-hexone NFN, N'-(9,10-Dihydro-9,10-dioxo -1,5-anthzaconadipl) bisbenzamide
6,6'-diethoxy - 1-2,2'- (3H, 3'H) bibenzo (b) thiophone - 3,3'-dione
7,16 -Dichloro - 6,15-dihydro - 5, 9, 14, 18 - anthenzine tetzone
16, 17, - Dimethoxyhimaphotho (1,2, 3 -cd: 3', 2', 1' - 1m) perylene - 5, 10 -diane
CI solublised vat yellow - 4, CI vat solublised vat Red-1, CI solublised vat violet 3, CI solublised vat violet - 1, CI solublised vat Blue - 6, CI solublised vat Blue-5, CI solublised vat Blue - 2, solublised (vat Blue Blue - 4, volublised vat green - 1, 2, 3, solublised vat Brow - 5, 1 vat Black - 1.

Suitable alcohol/ketone swelling agents may comprise mixtures of such ketones as Propanone, 4-penten-zone, or phenylethanone and alcohols such as methanol, ethanol or propanol

### Example 1

An aqueous dye solution of Vat solublised dye of the concentration 5% (^{W}/w) consisting of minor portions of swelling agents in predominantly aqueous dye solution, 5% by 5% i.e. alcohol/ketone solvent volume by volume to form a homogenous solution, was made up at ambient temperatures, and applied at ambient temperatures to a hydrogel contact lens. The hydrogel contact lens based on soft contact lens material classification Filcon group 1a (a homopolymer of 2-hydroxyethylmethacrylate containing not more than 0.2% weight of any ionisable chemical e.g. methacrylic acid) having a water content of 38% by effective polyester screen coated stencil masking for up to five minutes. The iris pattern imprint on the screen stencil was effective to mask the central 4 mm pupillary area and the outer peripheral area of the lens. The predominantly aqueous dye solution was subsequently removed from the masking screen by abosrbent material. The lens under masking, was carefully removed and exhibited iris pattern image formed by the predominantly aqueous dye solution and preconditioned in developer solution of sulphuric acid and sodium nitrite aqueous solutions concentrations 2% (^{V}/v) and 1% (^{W}/v) respectively for two minutes. The lens obtained consisted of a coloured iris pattern image, the pupillary and peripheral areas being clear.

### Example 2

An aqueous dye solution of vat solublised dye of the concentration up to 2% (^{W}/w) was applied at ambient temperatures to two hydrogel contact lenses. The hydrogel contact lenses were soft contact lens material classification Filcon group 4a (a copolymer of alkyl methacrylate and N-vinyl lactom and or acrylamide, but containing not more than 0.2% weight of any ionisable chemicals) and a Filcon group 4b (as described in Group 4a, but containing more than 0.2% weight of any ionisable chemicals) having a water content range 50 - 79%. The dye was applied through an effective polyester screen coated stencil masking for up to two minutes. The screen was effective to mask the central 4 mm pupillary area and the outer peripheral area of the lens. The excess aqueous dye solution was subsequently removed from the masking screen by absorbent material. The lens under masking, was carefully removed and developed as in Example 1. The lens was washed in deionised water and exhibited a coloured iris pattern image, the pupillary and peripheral areas being clear.

### Example 3

Example 1 was repeated on hydrogel soft contact lens material classificiation Filcon group 1b (essentially pure 2 - hyoxyethylmethacrylate containing more than 0.2% weight of any ionisable chemical), Filcon group 2a ( a copolymer of 2-hydroxyethylmethacrylate and/or other hydroxyalkyl methacrylates, but not more than 0.2% weight of any ionisable chemicals), Filcon group 2b (as described in 2a but containing more than 0.2% weight of any ionisable chemicals).

The sample results as in Example 1 were obtained. The lens exhibited coloured iris pattern image, the pupillary and peripheral areas being clear.

### Example 4

Example 1 was repeated on hydrogel soft contact lens material classification Filcon group 3a (a Copolymer of 2-hydroxyethylmethacrylate with a N-vinyl lactam but containing not more than 0.2% weight of any ionisable chemical).

The same results as in Example 1 were obtained.

### Example 5

Example 1 and 2 were repeated using a coated polyester screen with a stencil consisting of a range of pattern imprint patterns eg. lettering or numbering imprints patterns were applied on the screen, instead of iris images.

The resultant lens exhibited high definition of colour tint lettering or numbering.

### Example 6

The Example 1 was repeated using other patterns such as zig-zag or intermittent broken lines or solid shapes such as parabolas, triangles, ellipses, circles, or rectangles or combinations of the above to obtain a variety of patterned lenses.

### Example 7

The invention can also be applied to swellable gas permeable lens, such types will consist of soft lens materials incorporating a proportionate amount of polysiloxanes (lens material of this type has the advantage of soft lens comfort and extra property to induce high oxygen permeability to increase the efficiency during wear). The lens was first swollen by soaking in an organic solvent such as methylene chloride, toluene, methyisobulyl ketone or mixtures thereof. The purpose is to open the pore structure of the polyens matrix, in order to aid penetration of the vat dye solution. The solvent swollen lens is then tinted in accordance with the method of the invention.

### Example 8

The Example 1 was repeated to introduce a multicolour iris pattern on hydrogel soft contact lenses as in Example 1 to 5 by applying different colour aqueous dye solutions in series one after the other on the same surface or on both the inner concave surface as well as the outer convex surface. The resultant lens would consist of blend of colour tints.

## Claims

1. A method of forming a coloured non-solid pattern on a hydrogel substrate (21), in which the hydrogel material is adhered in a flat disposition by surface tension onto a tensioned flat screen (12) having a stencil pattern (14) formed therein, and a predominantly aqueous solution of a dye (22) in liquid form, without a viscosity enhancing agent, is applied gently to the other side of the screen so that it is absorbed into the hydrogel material only in the non-solid pattern corresponding to the stencilled area and then developed to form a coloured deposit therein.

2. A method of tinting the iris area of a hydrogel soft contact lens (21) which comprises exposing the area to be tinted to a vat dye (22) in a predominantly aqueous, liquid, solution without a viscosity enhancing agent by a masking technique so that the dye is absorbed only into the unmasked areas of the lens and then developing the dye, characterised in that the mask is a flat screen material (12) formed with an unmasked stencil portion in a non-solid pattern in the iris area of the lens, and during tinting the normally curved lens is adhered to the first side of the screen by surface tension in a flat disposition, and the dye solution is applied in drops to the other side of the screen, such that the dye is absorbed in a non-solid pattern into the iris area of the lens.

3. A method according to claim 1 or claim 2, wherein the hydrogel material has a low water content (38 to 50% water).

4. A method according to any one of the preceding claims, wherein the hydrogel material is a homopolymer of hydroxethylmethacrylate composition lightly crosslinked.

5. A method according to any one of the preceding claims, wherein the hydrogel material is selected from essentially pure 2-hydroxyethylmethacrylate containing not more than 5.0% wt of any ionisable chemical, or a copolymer of 2-hydroxyethylmethacrylate and other hydroxyalkylmethacrylates.

6. A method according to any one of the preceding claims, wherein the pattern includes a series of substantially radially extending lines (20).

7. A method according to any of the preceding claims, wherein the process is all carried out at ambient temperature.

8. A method according to claim 2, or any one of claims 3 to 7 when dependent on claim 2, wherein the dye is applied within five minutes and preferably within two minutes of the attachment of the lens (21) to the screen (12).

9. A method according to claim 8 including adding a swelling agent to the dye solution.

10. A method according to claim 8 or claim 9 including wetting the lens surface before application by hand to the masking screen and then waiting for up to two minutes for this water to be absorbed.

11. A method according to any one of claims 2, 8, 9 or 10, or anyone of claims 3 to 7 when dependent on claim 2, wherein at least a first side of the screen (12) is coated with a coating which acts to attract the lens (21).

## Patentansprüche

1. Ein Verfahren zur Bildung eines gefärbten, nicht-festen Musters auf einem Hydrogel-Substrat (21), bei dem das Hydrogel-Material durch Oberflächenspannung in einer flachen Anordnung auf einen gespannten flachen Schirm (12), der ein darin ausgebildetes Schablonenmuster (14) aufweist, haftend aufgebracht wird, und eine überwiegend wäßrige Lösung einer Farbe (22) in flüssiger Form ohne viskositätsverstärkendes Agens vorsichtig auf die andere Seite des Schirms aufgebracht wird, so daß es in das Hydrogelmaterial nur in dem nicht-festen Muster entsprechend dem schablonierten Bereich absorbiert und dann entwickelt wird, um darin eine gefärbte Ablagerung zu bilden.

2. Ein Verfahren zum Tönen des Iris-Bereiches einer weichen Hydrogel-Kontaktlinse (21), umfassend Aussetzen des zu tönenden Bereichs einem Küpenfarbstoff (22) in einer überwiegend wäßrigen, flüssigen Lösung ohne ein viskositätsverstärkenden Agens durch eine Maskierungstechnik derart, daß die Farbe nur in die nicht maskierten Bereiche der Linse absorbiert wird, und anschließendes Entwickeln der Farbe, dadurch gekennzeichnet, daß die Maske ein flaches Schirmmaterial (12) ist, ausgebildet mit einem nicht maskierten Schablonenabschnitt in einem nicht-festen Muster im Irisbereich der Linse, und daß während des Tönens die normalerweise gekrümmte Linse durch Oberflächenspannung auf die erste Seite des Schirms in einer flachen Anordnung zum Haften gebracht wird, und die Farblösung in Tropfen auf die andere Seite des Schirms derart aufgebracht wird, daß die Farbe in einem nicht-festen Muster in den Iris-Bereich der Linse aufgenommen wird.

3. Ein Verfahren nach Anspruch 1 oder Anspruch 2, bei dem das Hydrogelmaterial einen niedrigen Wassergehalt (38 bis 50 % Wasser) aufweist.

4. Ein Verfahren nach einem der vorangehenden Ansprüche, bei dem das Hydrogel-Material ein Homopolymer einer Hydroxyethylmethacrylat-Zusammensetzung, leicht vernetzt, ist.

5. Ein Verfahren nach einem der vorangehenden Ansprüche, bei dem das Hydrogel-Material aus im wesentlichen reinem 2-Hydroxyethylmethacrylat, enthaltend nicht mehr als 5,0 Gewichtsprozent einer ionisierbaren Chemikalie enthält, oder einem Copolymeer aus 2-Hydroxyethylmethacrylat und anderen Hydroxyalkylmethacrylaten gewählt wird.

6. Ein Verfahren nach einem der vorangehenden Ansprüche, bei dem das Muster eine Reihe sich im wesentlichen radial erstreckender Linien (20) umfaßt.

7. Ein Verfahren nach einem der vorangehenden Ansprüche, bei dem der gesamte Prozeß bei Umgebungstemperatur durcheführt wird.

8. Ein Verfahren nach Anspruch 2 oder nach einem der Ansprüche 3 bis 7, soweit auf Anspruch 2 bezogen, wobei die Farbe innerhalb von fünf Minuten und vorzugsweise innerhalb von zwei Minuten nach dem Befestigen der Linse (21) auf den Schirm (22) angewendet wird.

9. Ein Verfahren nach Anspruch 8, umfassend das Zuführen eines Quellagens zur Farblösung.

10. Ein Verfahren nach Anspruch 8 oder Anspruch 9, umfassend das Benetzen der Linsenoberfläche vor dem Einsatz per Hand auf den Maskierungsschirm und dann Warten von bis zu zwei Minuten darauf, daß dieses Wasser absorbiert wird.

11. Ein Verfahren nach einem der Ansprüche 2, 8, 9 oder 10 oder einem der Ansprüche 3 bis 7, soweit auf Anspruch 2 bezogen , bei dem wenigstens eine erste Seite des Schirms (12) mit einem Belag bedeckt wird, der auf die Linse (21) anziehend wirkt.

## Revendications

1. Procédé de formation d'un motif coloré non solide sur un substrat en hydrogel (21), dans lequel on fait adhérer l'hydrogel selon une disposition plate par la tension superficielle sur un écran plat tendu (12), où un motif de pochoir (14) est formé, et on applique doucement une solution aqueuse de façon prédominante d'un colorant (22) sous forme liquide, sans agent d'accroissement de viscosité, à l'autre côté de l'écran de sorte qu'elle n'est absorbée dans l'hydrogel que dans le motif non solide correspondant à la zone à pochoir, puis qu'elle est développée pour former un dépôt coloré.

2. Procédé de coloration de la zone d'iris d'une lentille de contact souple en hydrogel (21) qui comprend l'exposition de la zone à colorer à un colorant de cuve (22) dans une solution liquide aqueuse de façon prédominante, sans agent d'accroissement de viscosité, par une technique de masquage de sorte que le colorant n'est absorbé que dans les zones non masquées de la lentille, puis le développement du colorant, caractérisé en ce que le masque est un écran plat (12) formé avec une partie de pochoir non masquée selon un motif non solide dans la zone d'iris de la lentille et en ce que, lors de la coloration, on fait adhérer la lentille habituellement courbe au premier côté de l'écran par la tension superficielle selon une disposition plate et en ce qu'on applique la solution de colorant par des gouttes à l'autre côté de l'écran de sorte que le colorant est absorbé selon un motif non solide dans la zone d'iris de la lentille.

3. Procédé selon la revendication ou la revendication 2, dans lequel l'hydrogel présente une faible teneur en eau (38 à 50 % d'eau).

4. Procédé selon l'une quelconque des revendications précédentes, dans lequel l'hydrogel est un homopolymère de composition de méthacrylate d'hydroxyéthyle légèrement réticulée.

5. Procédé selon l'une quelconque des revendications précédentes, dans lequel on choisit l'hydrogel parmi le méthacrylate de 2-hydroxyéthyle essentiellement pur, ne contenant pas plus de 5,0 % en masse de produit chimique ionisable, et un copolymère de méthacrylate de 2-hydroxyéthyle et d'autres méthacrylates d'hydroxyalkyles.

6. Procédé selon l'une quelconque des revendications précédentes, dans lequel le motif comprend une série de lignes s'étendant sensiblement radialement (20).

7. Procédé selon l'une quelconque des revendications précédentes, dans lequel on met tout le procédé en oeuvre à température ambiante.

8. Procédé selon la revendication 2 ou selon l'une quelconque des revendications 3 à 7 lorsqu'elles dépendent de la revendication 2, dans lequel on applique le colorant moins de 5 min et de préférence moins de 2 min après la fixation de la lentille (21) à l'écran (12).

9. Procédé selon la revendication 8, comprenant l'addition d'un agent de gonflement à la solution de colorant.

10. Procédé selon la revendication 8 ou la revendication 9, comprenant le mouillage de la surface de lentille avant l'application manuelle à l'écran de masquage, puis l'attente pendant au maximum 2 min pour que cette eau soit absorbée.

11. Procédé selon l'une quelconque des revendications 2, 8, 9 ou 10 ou selon l'une quelconque des revendications 3 à 7 lorsqu'elles dépendent de la revendication 2, dans lequel on applique sur au moins un premier côté de l'écran (12) un revêtement qui a pour rôle d'attirer la lentille (21).
